# EUROPÄISCHE PATENTSCHRIFT

(11) **EP 3 777 473 B1**
(45) Veröffentlichungstag und Bekanntmachung des Hinweises auf die Patenterteilung: **24.11.2021**
(21) Anmeldenummer: 19711251.9
(22) Anmeldetag: 28.02.2019
(51) Int. Cl.: H05B 3/14, H05B 3/18, H05B 3/24, H05B 3/28, H05B 3/42, H05B 3/48, H01C 3/14, H01C 17/065, C04B 35/58, C04B 33/26, C04B 35/19, F24H 3/04

(54) **KERAMISCHER HEIZWIDERSTAND, ELEKTRISCHES HEIZELEMENT SOWIE VORRICHTUNG ZUR ERWÄRMUNG EINES FLUIDES**
CERAMIC HEATING RESISTANCE, ELECTRICAL HEATING ELEMENT AND APPARATUS FOR HEATING A FLUID
RÉSISTANCE CHAUFFANTE EN CÉRAMIQUE, ÉLÉMENT DE CHAUFFAGE ÉLECTRIQUE AINSI QU'APPAREIL POUR CHAUFFER UN FLUID

(30) Priorität: 26.03.2018 EP 18163884
(43) Veröffentlichungstag der Anmeldung: 17.02.2021
(73) Patentinhaber: Leister Technologies AG, 6056 Kägiswil (CH)
(72) Erfinder: BOIGER, Gernot, 8409 Winterthur (CH); BOLDRINI, Marlon, 8400 Winterthur (CH); GORBAR, Michal, 8600 Dübendorf (CH); DE HAZAN, Yoram, 8600 Uster (CH); HOCKER, Thomas, 8409 Winterthur (CH); HORAT-FÄSSLER, Pascal, 6015 Luzern (CH); MAUCHLE, Stéphane, 8400 Winterthur (CH); PENNER, Dirk, 8048 Zürich (CH); VON WYL, Bruno, 6056 Kägiswil (CH)
(74) Vertreter: Klocke, Peter
(86) Internationale Anmeldenummer: PCT/EP2019/055051
(87) Internationale Veröffentlichungsnummer: WO 2019/185291

(56) Entgegenhaltungen:
- EP-A1- 0 168 187
- EP-A1- 1 947 908
- EP-A1- 2 921 469
- DE-A1- 2 349 743
- DE-B- 1 243 078
- US-A- 4 862 137
- US-A1- 2005 184 058
- US-A1- 2017 268 801

## Beschreibung

Die Erfindung betrifft ein elektrisches Heizelement zum Erwärmen eines Fluides, vorzugsweise Luft, mit zumindest einem rohrförmigen Element, dass von einem Fluid durchströmt wird oder durchströmbar ist, und mit einem, in dem rohrförmigen Element angeordneten keramischen Heizwiderstand, wobei der Heizwiderstand durch Sintern eines mindestens einen keramischen Rohstoff aufweisenden Grünkörpers hergestellt ist, eine elektrisch isolierende Komponente sowie eine elektrisch leitende Komponente aufweist und die elektrisch isolierende Komponente eine Matrix bildet, in der die elektrisch leitende Komponente aufgenommen ist. Dabei handelt es sich also um einen Verbundwerkstoff aus metallischen und mineralischen Komponenten.

Unter einem Heizwiderstand wird in diesem Zusammenhang der Teil eines elektrischen Heizelements verstanden, der bei Stromfluss aktiv Wärme erzeugt und abgibt.

Die Erfindung betrifft außerdem eine Vorrichtung zur Erwärmung eines Fluids, vorzugsweise Luft, mit einem derartigen elektrischen Heizelement.

Die Offenlegungsschrift DE 2349743 A beschreibt ein elektrisches Widerstandselement für hohe Temperaturen mit einem durch ein leitendes, die Form einer Wendel aufweisendes Band gebildeten weißglühenden Bereich und einem Paar von mit diesem Bereich verbundenen Anschlussleitern. Das Widerstandselement besteht dabei im Wesentlichen aus einem dünnen Rohr mit kreisförmigem Querschnitt, dessen Außenwand zumindest teilweise wenigstens durch eine wendelförmig ausgebildete Ausnehmung geschlitzt ist, wobei die zentrale Rohrachse zugleich die Schraubachse der wendelförmigen Ausnehmung(en) ist. Das Widerstandselement hat ein rohrförmiges, poröses Skelett aus Siliziumcarbid, in das ein schwer schmelzbarer, metallisch leitender Zusatz, wie etwa Molybdänsilicid, eingesickert ist, um alle Hohlräume des Skeletts vollständig auszufüllen. Das rohrförmige Widerstandselement kann daher mit sehr dünnen Wänden hergestellt werden, um eine größere Energieabgabe an seiner Oberfläche zu ermöglichen, während es gleichzeitig eine verbesserte mechanische Festigkeit und einen positiven Temperaturkoeffizienten für den elektrischen Widerstand hat.

Der Nachteil des vorstehend beschriebenen Widerstandselements ist die verglichen mit seinen Gesamtabmessungen geringe Größe der für eine Wärmeenergieübertragung an ein das Widerstandelement umgebendes und/oder sowohl durchströmendes als auch umströmendes Medium wie eine Flüssigkeit oder ein Gas wirksame Oberfläche bei einem rohförmigen Körper. Dabei wird bereits vorausgesetzt, dass ein mittels des Widerstandselements zu erhitzendes Fluid das Widerstandselement überhaupt umströmt. Zusätzlich muss dann im Grunde vorausgesetzt werden, dass eine Vorzugsströmungsrichtung des Fluids parallel zu der zentralen Achse, also der Symmetrieachse des Rohres, aus dem das Widerstandselement im Wesentlichen besteht, existiert. Des Weiteren kann der Querschnitt des Fluidstroms nur unwesentlich größer sein als der Querschnitt des Widerstandselements, da ansonsten keine effektive Wärmeenergieübertragung auf den das Rohr umströmenden (und nicht durchströmenden) Anteil des Fluidstroms erfolgen kann. Da das rohrförmige Widerstandselement nur eine geringe Materialstärke, d. h. eine geringe Dicke der Rohrwandung, aufweisen soll, wird die für den Wärmeenergieübertrag wirksame Oberfläche durch den oder die wendelförmigen Ausnehmungen in der Rohrwandung auch nur unwesentlich vergrößert.

Die Schrift US 2017/0268801 A1 offenbart ein gestanztes Widerstandselement zur Verwendung in elektrischen Geräten, ein Herstellungsverfahren des gestanzten Widerstandselements und eine Vorrichtung, die mit einem gestanzten Widerstandselement ausgestattet ist. Das Widerstandselement wird in einem Stanzverfahren hergestellt und soll als Ersatz für herkömmliche schraubenförmige elektrische Widerstände verwendet werden, sei es in Haartrocknern und ähnlichen Geräten oder in anderen Arten von Heizgeräten. Das gestanzte Widerstandselement wird als Rohling aus einem Blech mit einem bekannten Widerstandskoeffizienten hergestellt.

Die Schrift EP 0 168 187 A1 legt Halterungen (Träger, Trägerstrukturen) für elektrische Heizelemente, Heizelementbaugruppen einschließlich solcher Halterungen, Heißluftgebläse einschließlich solcher Halterungen und Verfahren zur Herstellung solcher Halterungen offen. Die Erfindung bezieht sich insbesondere auf Halterungen für die elektrischen Heizelemente von Lufterhitzern, z. B. solche, die in Geräten verwendet werden, in denen ein Strom von Luft über das Heizelement gedrückt wird. Beispiele für solche Geräte sind Haartrockner und Lufterhitzer zum Entlacken und ähnliche Zwecke.

Die Schrift EP 1 947 908 A1 offenbart eine Heizwendelanordnung zum Erwärmen strömender Gasstoffe, mit einem wenigstens abschnittsweise zu einem Heizwendel aufgewickelten Heizleiter zum Umwandeln elektrischer Energie in Wärmeenergie, mit einem vom Heizwendel wenigstens abschnittsweise umwickelten und in axialer Richtung der Heizwendel verlaufenden Stützelement und mit wenigstens einem am axialen Ende des Stützelements angebrachten Anschlusskontakt, der mit dem Heizleiter elektrisch leitend verbunden ist. Um eine Heizwendelanordnung mit verbesserter Wärmeverteilung bereitzustellen, ist erfindungsgemäß vorgesehen, dass das Verhältnis zwischen der Breite des Stützelements zum axialen Abstand vom axialen Ende des Stützelements zur nächstgelegenen Passierstellen, an welcher der Heizleiter eine Seitenfläche des Stützelements passiert, größer oder gleich drei ist.

Die Schrift US 4,862,137 legt eine Widerstandsheizvorrichtung mit einer Längsachse und einem im Wesentlichen zylindrischen Graphitheizelement mit einem Verbindungsteil zum Anschluss an eine elektrische Energiequelle offen. Die Vorrichtung weist eine Hülle auf, die das Graphitheizelement umgibt, radial davon beabstandet ist und eine gasdichte Kammer um das Graphitheizelement herum definiert. Die Hülle besteht aus einem Blech aus einer hochschmelzenden Legierung mit winkelverteilten Längswellungen und einer Innenfläche, die so angeordnet ist, dass diese über ihre gesamte Fläche die vom Graphitheizelement abgegebene Strahlung empfängt und sich die Hülle so dementsprechend erhitzt.

Aus dem Stand der Technik sind zudem allgemein elektrische Heizelemente bzw. Heizwiderstände zur Erwärmung eines Fluids aus Siliziumcarbid-Keramik oder anderen Keramiken bekannt, jedoch ist die Herstellung von Siliziumcarbid-Keramiken wegen den benötigten hohen Sintertemperaturen relativ teuer und daher insbesondere für Heizelemente in diesem Bereich nicht wirtschaftlich. Üblich ist es daher, bei Heizelementen in Form eines Einlochrohres oder Mehrlochrohres, die von einem Fluid durchströmt werden, wendelförmige Heizdrähte einzuziehen und elektrisch in Reihe zu schalten. Das keramische Rohr dient dabei als elektrischer und thermischer Isolator. Die Heizwendeln müssen aufwendig von Hand in das Rohr eingezogen werden. Diese Konstruktionen zudem sind anfällig für Verschmutzung und müssen nicht zuletzt aufgrund von Verschleiß der Heizwendeln durch die thermische Belastung in Kombination mit der Verschmutzungsproblematik regelmäßig ausgetauscht werden. Vorrichtungen zur Erwärmung eines Fluids basierend auf derartigen Heizelementen bzw. Heizwiderständen sind daher wartungsintensiv.

Ausgehend von den sich aus dem diskutierten Stand der Technik ergebenden Problemen liegt der vorliegenden Erfindung die Aufgabe zu Grunde, ein kompaktes elektrisches Heizelement mit zumindest einem einem keramischen Heizwiderstand zur Erwärmung eines Fluids vorzuschlagen, der eine effiziente Wärmeübertragung bei möglichst geringer Erwärmung des keramischen Heizwiderstands selbst an ein zu erwärmendes Fluid ermöglicht, den Wartungsaufwand deutlich verringert und in der Herstellung einfach und kostengünstig ist.

Diese Aufgabe wird erfindungsgemäß durch ein elektrisches Heizelement mit den Merkmalen des unabhängigen Patentanspruchs 1 und des nebengeordneten Patentanspruchs 9 gelöst. Weitere vorteilhafte Ausgestaltungen sind den jeweils rückbezogenen Ansprüchen zu entnehmen.

Demnach weist ein keramischer Heizwiderstand eines erfindungsgemäßen elektrischen Heizelements eine Anordnung aus zwei offenen Wendelflächenkörpern mit jeweils einer zentralen Schraubachse auf, wobei die Schraubachsen der Wendelflächenkörper zueinander parallel und die Wendelflächenkörper berührungslos ineinander gewendelt sind, die zentralen Schraubachsen der Wendeflächenkörper im Wesentlichen parallel zu der zentralen Achse des rohrförmigen Elements ausgerichtet sind, die Wendelflächenkörper im Bereich eines Endes der Wendelflächenanordnung elektrisch leitend miteinander verbunden sind und an einem gegenüberliegenden weiteren Ende der Wendelflächenanordnung als separate Anschlusselektroden ausgebildet sind, in zumindest einem zentralen, durch die offenen Wendelflächenkörper entlang der Schraubachsen der offenen Wendelflächenkörper gebildeten Hohlraum ein elektrisch isolierendes Element angeordnet ist, wobei das elektrisch isolierende Element rohrförmig, stabförmig oder abschnittsweise rohrförmig und stabförmig ausgebildet ist, und die Querschnittsfläche des rohrförmigen Elements bezüglich Form und Größe nur unwesentlich Größer als die maximale Querschnittsfläche des Heizwiderstands ist.

Ein Wendeflächenkörper ergibt sich dabei aus der Verschraubung einer ebenen Fläche entlang einer Schraublinie im euklidischen Raum um eine zentrale Schraubachse, wobei an einem Ausgangspunkt der Verschraubung die Fläche in einer Ebene mit der Schraubachse und einer weiteren, zu der Schraubachse orthogonalen Achse angeordnet ist. Eine solche Schraublinie wird auch als Helix bezeichnet. Die Fläche grenzt dabei mit zumindest einem Punkt auf einer Kurve, die die Fläche zumindest teilweise berandet, an die Schraubachse oder es liegt ein nichtverschwindender radialer Mindestabstand zwischen der Schraubachse und wenigstens einem Punkt einer die Fläche zumindest teilweise berandenden Kurve vor. Die Parameter der Schraublinie ebenso wie der der Fläche können sich dabei im Verlauf der Verschraubung zwischen einem Anfangspunkt und einem Endpunkt der Verschraubung kontinuierlich, stetig oder unstetig verändern. Dabei kann sich etwa der radiale Abstand der Punkte der Schraublinie zu der Schraubachse ändern oder die Steigung der Kurve, d. h., die Anzahl an Windungen der Schraublinie bezogen auf eine Standardlängeneinheit entlang der Schraubachse. Bezüglich der Fläche kann etwa die Form als auch die Größe der Fläche variieren. Dadurch ist eine Vielzahl an die jeweiligen Anwendungserfordernisse angepassten Varianten von Wendelflächenkörpern realisierbar.

Wie in einem vorstehenden Abschnitt bereits angedeutet, weist ein erfindungsgemäßes elektrisches Heizelement zur Erwärmung eines Fluids zumindest ein rohrförmiges Element auf, in dem ein keramischer Heizwiderstand derart angeordnet wird, dass das zu erwärmende Fluid mit einer Vorzugsströmungsrichtung parallel zu den Schraubachsen der Wendelflächenkörper die Wendelflächenkörper des Heizwiderstands umströmt. Dementsprechend wird vorgeschlagen, dass die Querschnittsfläche des rohrförmigen Elements bezüglich ihrer Form und Größe derart ausgestaltet ist, dass die Querschnittsfläche des rohrförmigen Elements nur unwesentlich größer als die maximale Querschnittsfläche des Heizwiderstands ist. Die Querschnittsfläche des rohrförmigen Elements sollte also lediglich in so weit größer sein, als das ein einfaches Einsetzen des Heizwiderstands in das rohrförmige Element ermöglicht wird und die thermische Ausdehnung des Heizwiderstands im Betrieb nicht zu einem direkten Kontakt von Heizwiderstand und dem rohrförmigen Elements führen, wobei des Weiteren auch noch die Fertigungstoleranzen von Heizwiderstand und dem rohrförmigen Element berücksichtigt werden sollten. Insgesamt führt dies dazu, dass ein den Heizwiderstand umströmendes Fluid außer in vernachlässigbaren Randbereichen in unmittelbarer Nähe der Innenwand des rohrförmigen Elements gezwungen wird, einer von dem Wendeflächenkörper des Heizwiderstand vorgegebenen schraubenförmigen Bahn zu folgen. Dadurch wird die Wärmeübertragung von dem Heizwiderstand auf das Fluid optimiert. Im Vergleich zu den aus dem Stand der Technik bekannten Heizelementen bzw. Heizwiderständen kann ein erfindungsgemäßes elektrisches Heizelement bei gleicher Wärmeübertragungsleistung auf ein einen keramischen Heizwiderstand des Heizelements umströmendes Fluid bei geringeren Temperaturen betrieben werden und/oder ein erfindungsgemäßes elektrisches Heizelement, insbesondere bezogen auf seine Ausdehnung entlang der Schraubachsen der Wendelflächenkörper des Heizwiderstands als Vorzugslängsachsen, kompakter (kürzer) gestaltet werden. Die resultierende Strömungsrichtung des Fluids ist natürlich parallel zu der zentralen Achse des rohrförmigen Elements, wobei die Schraubachsen der Wendelflächenkörper des Heizwiderstands vorzugsweise mit der zentralen Achse des rohrförmigen Elements zusammenfallen oder zumindest parallel zu der zentralen Achse des rohrförmigen Element verlaufen. Die Innenwand des rohrförmigen Elements kann dabei zusätzlich zumindest stückweise korrespondierend zu einer einhüllenden Außenkontur des Heizwiderstands, insbesondere der Wendelflächenkörper des Heizwiderstands, ausgebildet sein, um den radialen Abstand und die Querschnittsfläche zwischen der einhüllenden Außenkontur und der Innenwand des rohrförmigen Elements ebenso wie den Fluidstrom in diesem Bereich auf ein notwendiges Minimum (Fertigungstoleranzen, thermische Ausdehnung) zu reduzieren.

Weitere Optimierungen können sich, wie schon angedeutet, etwa aus dem Abstand der Wendeln, deren (lokaler) axialer und/oder (lokaler) radialer Dicke ergeben. Als Wendel wird dabei ein Teilsegment eines Wendelflächenkörpers verstanden, das sich gerade einmal um die Schraubachse windet. Die (lokale) radiale Dicke ergibt sich dabei aus der Differenz von dem (lokalen) maximalen radialen Abstand und dem (lokalen) minimalen radialen Abstand eines Wendelflächenkörpers von der Schraubachse. Die (lokale) axiale Dicke ist die lokale Dicke oder Materialstärke eines Wendelflächenkörpers in axialer Richtung, also parallel zu seiner Schraubachse.

Zur elektrischen Kontaktierung eines keramischen Heizwiderstands eines erfindungsgemäßen elektrischen Heizelements weist der Heizwiderstand vorzugsweise zumindest zwei separate Anschlusselektroden auf. An dem Heizwiderstand kann auch zumindest ein Mittel zur Fixierung an einem Heizelement vorgesehen sein. Sind in den genannten Bereichen auch Anschlusselektroden angeordnet, so wird die Anordnung der Fixiermittel an der Anschlusselektrode, über die elektrischer Strom in den Heizwiderstand eingeleitet wird, besonders bevorzugt.

Ein erfindungsgemäßes elektrisches Heizelement weist zumindest einen keramischen Heizwiderstand mit einer Anordnung von zwei Wendelflächenkörpern auf, die berührungslos ineinander gewendelt sind. Eine Verbindung der beiden Wendelflächenkörper eines Heizwiderstands untereinander steht dem nicht entgegen, sofern die Verbindung außerhalb des eigentlichen Wendelflächenkörpers erfolgt, also etwa an einer Anformung oder einem Fortsatz des jeweiligen Wendelflächenkörpers an einem Anfangs- und/oder Endpunkt der jeweiligen Schraublinie. Dementsprechend ist vorgesehen, dass die beiden Wendelflächenkörper eines keramischen Heizwiderstands eines erfindungsgemäßen elektrischen Heizelements im Bereich eines Endes der Wendelflächenanordnung elektrisch leitend miteinander verbunden sind und an einem gegenüberliegenden weiteren Ende der Wendelflächenanordnung als separate Anschlusselektroden ausgebildet sind. Dann kann über eine der Anschlusselektroden elektrischer Strom in den Heizwiderstand eingeleitet werden, wobei dieser dann zunächst durch den zugehörigen Wendelflächenkörper und anschließend über die Verbindung der Wendelflächenkörper am anderen Ende der Wendenflächenanordnung in einen weiteren Wendelflächenkörper fließt, über dessen Anschlusselektrode der Stromfluss wieder ausgeleitet wird.

Die Schraubachsen der zumindest zwei Wendelflächenkörper sind dabei parallel, müssen jedoch nicht notwendiger Weise zusammenfallen, die Schraubachsen können also auch in radialer Richtung beabstandet sein. Damit die Wendelflächenkörper berührungslos ineinander wendeln, sind zumindest die Schraublinien um einen Winkel in einer Ebene senkrecht zu den Schraubachsen zueinander verdreht und die Wendelflächenkörper zumindest in einer gewissen radialen Umgebung um die Schraubachsen herum als Hohlkörper ausgeführt. Die genaue Ausgestaltung obliegt dem Fachkundigen abhängig vom Einsatzzweck des erfindungsgemäßen Heizelements etwa in Abhängigkeit der radialen Ausdehnung der Wendelflächenkörper insgesamt ebenso wie der (lokalen) axialen Dicke der Wendeln und der (lokalen) radialen Dicke der Wendeln der Wendelflächenkörper. Zumindest die Steigung der jeweiligen Schraublinie der Wendenflächenkörper sollte vorzugsweise (lokal) identisch ist, um ein Kreuzen der Wendelflächenkörper zu vermeiden. Die ineinander wendelnden Wendelflächenkörper müssen darüber hinaus jedoch nicht zwingend identisch ausgeführt sein.

Es wird vorgeschlagen, einen keramischen Heizwiderstand eines erfindungsgemäßen elektrischen Heizelements durch entsprechende Materialauswahl und Ausgestaltung der Anordnung aus zwei Wendelflächenkörpern etwa hinsichtlich der Steigung der Schraublinien sowie der ― jeweils gegebenenfalls variablen ― radialen und axialen Dicke der Wendeln der Wendelflächenkörper derart auszubilden, dass der Heizwiderstand im Bereich der Anschlusselektroden im Betrieb die niedrigsten Temperaturen des gesamten Heizelements aufweist, um die problematische thermische Belastung der Anschlusselektroden zu verringern und die Lebensdauer des Heizelements zu verbessern. Vorzugsweise ist die Temperatur des Heizwiderstands in dem oder den Teilbereichen des Heizwiderstands am Größten, der an den oder die elektrisch leitenden Verbindungsbereiche der Wendelflächenkörper des Heizwiderstands grenzt. Zumindest eine der Anschlusselektroden kann so ausgestaltet sein, dass sie Mittel zur Fixierung an dem Heizelement aufweist, dass dazu korrespondierende Fixiermittel zur Herstellung einer (wieder lösbaren) Verbindung aufweist. Weist keine der Anschlusselektroden Fixiermittel auf, so wird vorgeschlagen, das eventuelle derartige Fixiermittel zumindest in dem Teilbereich des Heizwiderstands um die Anschlusselektroden herum angeordnet sind, um insbesondere auch die thermische Belastung der Fixiermittel zu minimieren.

Es ist vorgesehen, dass die beiden Wendelflächenkörper eines keramischen Heizwiderstands eines erfindungsgemäßen elektrischen Heizelements als offene Wendelflächenkörper ausgebildet sind. Ein offener Wendelflächenkörper schließt die Schraubachse nicht mit ein. Das bedeutet, dass ein offener Wendelflächenkörper per Definition in einer gewissen radialen Umgebung um die Schraubachse herum vollständig hohl ausgeführt ist. Dies dient insbesondere der Beschränkung elektrisch leitenden Kontakts der Wendelflächenkörper untereinander auf den oder die elektrisch leitenden Verbindungsbereiche.

Zudem ist bei einem erfindungsgemäßen elektrischen Heizelement vorgesehen, dass in dem zentralen Hohlraum der Anordnung aus den beiden offenen Wendelflächenkörpern eines keramischen Heizwiderstands des elektrischen Heizelements ein elektrisch isolierendes Rohr aus einem keramischen Material angeordnet ist. Das Rohr kann etwa zur Aufnahme einer Messsonde, insbesondere eines Thermometers, ausgebildet sein. Alternativ kann das elektrisch isolierende Rohr etwa auch als Lager und/oder Teil einer Fixierung des Heizelements ausgestaltet sein, wobei es dann auch als massiver Stab oder segmentweise rohrförmig als auch stabförmig ausgebildet sein kann.

Eine präferierte Ausgestaltungsvariante eines erfindungsgemäßen elektrischen Heizelements sieht vor, dass das Verhältnis der radialen Wendeldicke und der axialen Wendelbreite zumindest eines Wendelflächenkörpers eines keramischen Heizwiderstands des elektrischen Heizelements mindestens 2:1 beträgt.

In einer bevorzugten Ausgestaltungsvariante eines erfindungsgemäßen elektrischen Heizelements beträgt das Verhältnis zwischen dem Innendurchmesser und dem Außendurchmesser zumindest eines Wendelflächenkörpers eines keramischen Heizwiderstands des elektrischen Heizelements maximal 0,5 (1:2).

Es ist dabei vorgesehen, dass die axiale Wendelbreite zusätzlich variabel sein kann, und zwar sowohl in radialer Richtung, z. B. von einem kleinerem zu einem größeren Radius um die Schraubachse anwachsend, als auch in axialer Richtung entlang der Schraubachse, etwa von dem Anfangspunkt der Schraublinie eines Wendelflächenkörpers her ihrem Endpunkt hin abnehmend. Bei einer in radialer Richtung variablen axialen Wendelbreite wird die bereits genannte radial anwachsende axiale Wendelbreite bevorzugt. Eine weitere Ausgestaltungsmöglichkeit eines keramischen Heizwiderstands eines erfindungsgemäßen elektrischen Heizelementes ergibt sich dann dadurch, dass zumindest ein Wendelflächenkörper des Heizwiderstands entlang seiner Schraubachse einen variablen Abstand benachbarter Windungen aufweisen kann, also die Steigung der zugehörigen Schraublinie variabel ist. Im Rahmen der vorgeschlagenen Ausbildung eines keramischen Heizwiderstands eines erfindungsgemäßen elektrischen Heizelements aus einer Anordnung zweier ineinander gewendelter Wendelflächenkörper wird dabei ein Anwachsen des Abstands benachbarter Wendeln von dem einen Ende der Anordnung im Bereich der Anschlusselektroden zu dem anderen Ende mit dem Verbindungsbereich der Wendelflächenkörper hin besonders bevorzugt.

Gemäß einer begünstigten Ausgestaltungsvariante eines erfindungsgemäßen elektrischen Heizelements ist vorgesehen, dass bei einem keramischen Heizwiderstand des elektrischen Heizelements die elektrisch leitende Komponente zumindest teilweise aus einer Metalllegierung vom Silizid-Typ, insbesondere Molybdändisilizid, gebildet ist. Silizide sind binäre metallische Verbindungen des Siliziums und werden meist den intermetallischen Verbindungen zugerechnet. Sie sind typischerweise elektrisch leitfähig, weisen Metallglanz auf und kristallisieren in definierten Strukturen aus. Es sind Silizide vieler Metalle bekannt, jedoch bilden Aluminium, Antimon, Arsen, Bismut, Cadmium, Quecksilber, Silber, Thorium und Zink keine Silizide. Zu den bekannten Metallsiliziden zählt auch Molybdändisilizid.

Eine besonders bevorzugte Ausgestaltungsvariante eines erfindungsgemäßen elektrischen Heizelement umfasst, dass die elektrisch isolierende Komponente eines keramischen Heizwiderstands des elektrischen Heizelements von einem Mineral vom Silikat-Typ, vorzugsweise Feldspat, von einer Keramik vom Oxid-Typ, vorzugsweise Aluminiumoxid oder einer beliebigen Kombination hiervon, gebildet ist. Natürliche Silikatminerale spielen eine große Rolle in der Mineralogie. Die Erdkruste besteht zu über 90% und der Erdmantel fast vollständig aus Silikaten. Andere wichtige gesteinsbildende Minerale sind Glimmer, Tonminerale, Amphibole, Spate, usw. Silikatminerale sind typischerweise Isolatoren. Sie sind entsprechend kostengünstig. Oxidkeramiken sind typischerweise ebenfalls Isolatoren und weisen gegenüber Silikatkeramiken höhere Festigkeiten auf, insbesondere bei erhöhten Temperaturen.

Ein derartiger keramischer Heizwiderstand eines erfindungsgemäßen elektrischen Heizelements wird typischerweise durch Sintern eines Grünkörpers hergestellt, der durch Pressen, Gießen, Spritzgießen und/oder Extrudieren oder anderen geeigneten keramischen Formgebungsverfahren eines Stoffgemisches erzeugt wird, das die elektrisch leitende Komponente vom Silizid-Typ und die elektrisch isolierenden Komponente vom Silikat- und/oder Oxid-Typ enthält. Der so entstandene Grünkörper kann dann ggf. mechanisch bearbeitet sowie einfach oder mehrfach beschichtet werden und schließlich zu seiner finalen Form gesintert werden.

Die elektrische Leitfähigkeit eines gesinterten keramischen Heizwiderstandes eines erfindungsgemäßen elektrischen Heizelements ist abhängig von dessen Geometrie und damit von der des Grünkörpers. Sie ist außerdem abhängig von dem Mischungsverhältnis der elektrisch leitenden Komponente vom Silizid-Typ und der elektrisch isolierenden Komponente vom Silikat- und/oder Oxid-Typ des zur Formung verwendeten Stoffgemisches. Der spezifische elektrische Widerstand des Heizwiderstands kann in einem weiten Rahmen durch spezielle Einstellung des Mischungsverhältnisses variiert werden, und so die Leitfähigkeit an den Verwendungszweck des keramischen Heizwiderstands und die diesbezüglich vorgegebenen Verhältnisse angepasst werden. Natürlich ist der Widerstand des Heizwiderstands auch beeinflussbar, indem die Geometrie des Grünkörpers variiert wird. Die Geometrie des Heizwiderstands, die abhängig von der des Grünkörpers ist, ist jedoch häufig durch die Verwendung des Heizwiderstands und die dortigen Verhältnisse vorgegeben, und kann damit häufig nur in einem geringen Rahmen variiert werden.

Gerade diese Kombination aus einer elektrisch leitenden Komponente vom Silizid-Typ und einer elektrisch isolierenden Komponente vom Silikat- und/oder Oxid-Typ hat sich in dem erforderlichen Temperaturbereich, insbesondere für den Einsatz eines erfindungsgemäßen elektrischen Heizelements umfassend einen derartigen keramischen Heizwiderstands in einem Lufterhitzer, in Bezug auf die Herstellung, das Betriebsverhalten und die erforderlichen Variationsmöglichkeiten als besonders geeignet gezeigt. Zwar sind Verbundwerkstoffe aus mindestens zwei Komponenten, von denen eine von einer elektrisch leitenden Komponente von einer Metalllegierung vom Silizid-Typ und die andere von einer elektrisch isolierende Komponente von einem Mineral vom Silikat- und/oder von einer Keramik vom Oxid-Typ gebildet ist, bekannt, jedoch sind diese im Wesentlichen im Bereich Hochtemperaturofentechnik etabliert im Einsatz.

Ein keramischer Heizwiderstand eines erfindungsgemäßen elektrischen Heizelements weist vorzugsweise einen Feldspat ― Molybdändisilizid ― Verbundwerkstoff auf, wobei der Verbundwerkstoff in einer besonders bevorzugten Ausgestaltungsvariante zusätzlich eine weitere Komponente aus Aluminiumoxid aufweisen kann. Molybdändisilizid MoSi₂ ist beständig bei hohen Temperaturen und weist einen hohen Schmelzpunkt, eine große Oxidationsbeständigkeit und eine hohe Leitfähigkeit auf. Es zeichnet sich gegenüber anderen keramischen Werkstoffen durch tiefere Sintertemperaturen aus. Damit ist die Herstellung des Heizwiderstands besonders günstig und einfach. Feldspat ist kostengünstig und weist einen vergleichsweise niedrigeren Schmelzpunkt auf. Dies hilft beim Sinterprozess und verringert die Porosität. Feldspat und Molybdändisilizid besitzen ähnliche Wärmeausdehnungskoeffizienten und ermöglichen somit einen funktionierenden Verbund bei den üblichen Betriebstemperaturen des Heizwiderstands und auch bei Temperaturschwankungen. Die bei der Sinterung zum Endprodukt einsetzende Verglasung des Feldspates umhüllt die Molybdändisilizid-Partikel und schützt diese dadurch wirkungsvoll vor Oxidation. Durch die Verwendung von Feldspat in diesem Verbundmaterial wirkt dieser einer bei Molybdändisilizid bekannten Molybdändisilizid-Pest entgegen.

Molybdändisilizid MoSi₂ ist dabei eine intermetallische chemische Verbindung des Molybdäns aus der Gruppe der Silizide. Neben diesem sind mit MosSi und Mo₅Si₃ noch weitere Molybdänsilizide bekannt. Molybdändisilizid ist beständig gegen Säuren, verdünnte Laugen, Salzlösungen sowie verschiedene Salzschmelzen. Außerdem hebt es sich von anderen Metallen und Legierungen durch hohe Korrosionsbeständigkeit gegen reduzierende wie oxydierende Gase bei hohen Temperaturen ab.

Feldspäte sind mit 50 bis 60 Volumenprozent die häufigsten Silikate in der Erdkruste. Als Feldspat wird eine große Gruppe der allgemeinen chemischen Zusammensetzung (Ba,Ca,Na,K,NH₄) (Al,B,Si)₄O₈ bezeichnet. Die in Klammern angegebenen Elemente können sich jeweils gegenseitig vertreten, stehen jedoch immer im selben Mengenverhältnis zu den anderen Bestandteilen des Minerals (Substitution). Feldspate kristallisieren entweder im monoklinen oder im triklinen Kristallsystem, der Schmelztemperaturbereich liegt bei etwa 1150 bis 1250 °C. Die mit den Feldspäten verwandten Feldspatoide (Foide) und zusätzlich andere Silikatglas bildende Stoffe sind ebenfalls für die isolierende Komponente im Verbundwerkstoff eines keramischen Heizwiderstands eines erfindungsgemäßen elektrischen Heizwiderstands verwendbar.

Aluminiumoxid weist gegenüber Feldspäten höhere Schmelztemperaturen auf und verbessert damit die Festigkeit eines keramischen Heizwiderstands eines erfindungsgemäßen elektrischen Heizelements, insbesondere bei erhöhten Temperaturen, in dem es stützend auf die Materialstruktur eines Feldspat ― Molybdändisilizid ― Aluminiumoxid ― Verbundwerkstoffes wirkt.

Ein keramischer Heizwiderstand eines erfindungsgemäßen elektrischen Heizelements kann einen Heizbereich und mindestens einen elektrisch leitenden Kontaktierungsbereich aufweisen, der gegenüber dem Heizbereich mit einer höheren elektrischen Leitfähigkeit ausgebildet ist. Der Kontaktierungsbereich ist zum Anbringen und elektrischen Verbinden von Anschlusselektroden vorgesehen, über die eine elektrische Spannung an den Heizbereich angelegt werden kann, um eine Erwärmung des Heizwiderstands, insbesondere des Heizbereichs, zu bewirken. Der Kontaktierungsbereich erstreckt sich somit vorteilhafterweise zumindest teilweise zwischen den Anschlusselektroden und dem Heizbereich. Als Heizbereich werden dabei vor allem die als Wendelflächenkörper ausgebildeten Teilereiche eines keramischen Heizwiderstands eines erfindungsgemäßen elektrischen Heizelements betrachtet. Kontaktierungsbereiche sind vorzugsweise außerhalb der als Wendelflächenkörper ausgebildeten Bereiche des Heizwiderstands angeordnet, etwa im Bereich von Anformungen oder Fortsätzen im Bereich des Anfangs- und/oder Endpunktes der Schraublinie eines Wendelflächenkörpers. Der Kontaktierungsbereich kann hierbei an den Heizbereich in Stromflussrichtung anschließen oder zumindest einen begrenzten Teil des Heizbereichs auch quer zur Stromflussrichtung teilweise über- bzw. umgreifen. In dem Kontaktierungsbereich ist der Anteil der elektrisch leitenden Metalllegierung grösser ist als bei dem Heizbereich, sodass dieser einen geringeren spezifischen Widerstand bzw. eine höhere Leitfähigkeit gegenüber dem Heizbereich aufweist und somit weniger erhitzt wird als der eigentliche Heizbereich. Vorzugsweise ist hierbei der Anteil der Metalllegierung im Kontaktierungsbereich mindestens um das 1,2-fache höher ist als im Heizbereich.

Zusätzlich kann ein keramischer Heizwiderstand eines erfindungsgemäßen elektrischen Heizelements mindestens einen elektrisch isolierenden Isolationsbereich aufweisen, der gegenüber dem Heizbereich und/oder dem Kontaktierungsbereich mit geringerer elektrischer Leitfähigkeit ausgebildet, indem der Anteil der elektrisch leitenden Metalllegierung geringer ist als bei dem Heizbereich und/oder dem Kontaktierungsbereich. Der Isolationsbereich kann als Isolationsschicht zwischen dem Kontaktierungsbereich und dem Heizbereich angeordnet sein, wenn der Kontaktierungsbereich den Heizbereich des Heizwiderstandes in Stromflussrichtung teilweise um- oder übergreift. Aufgrund des in dem Isolationsbereich geringeren Materialanteils an elektrisch leitender Metalllegierung verglichen mit dem Heizbereich bzw. dem Kontaktierungsbereich weist dieser einen hohen spezifischen Widerstand gegenüber dem Heizbereich bzw. dem Kontaktierungsbereich auf, so dass ein unerwünschter Stromfluss sicher verhindert und/oder den Stromfluss nur in einer durch die Anordnung vorgegebenen Richtung durch den Heizwiderstand bzw. durch das den Heizwiderstand aufweisende erfindungsgemäße elektrische Heizelement zulässt.

Bei einem keramischen Heizwiderstand eines erfindungsgemäßen elektrischen Heizwiderstands wird vorgeschlagen, dass der oder die jeweiligen Kontaktierungsbereiche und/oder der oder die jeweiligen Isolationsbereiche als Beschichtung auf einem äußeren Abschnitt des Heizbereichs, und/oder der Isolationsbereich als Beschichtung auf einem äußeren Abschnitt des Heizbereichs und der Kontaktierungsbereich als Beschichtung auf einem Abschnitt des Isolationsbereichs und des Heizbereichs aufgebracht werden. Als äußerer Abschnitt des Heizbereichs wird dabei ein als Heizbereich ausgeführter Abschnitt eines erfindungsgemäßen Heizwiderstands verstanden, der jedoch kein als Wendelflächenkörper ausgeführter Abschnitt des Heizwiderstands ist, sich jedoch vorzugsweise als Anformung oder Fortsatz an einen als Wendelflächenkörper ausgeführten Abschnitt anschließt. Damit sind beliebige Kombinationen des Kontaktierungsbereichs und des Isolationsbereichs miteinander und mit dem Heizbereich realisierbar. Insbesondere ist somit eine beliebige Anzahl von Isolationsbereichen bzw. Kontaktierungsbereichen auf einem äußeren Abschnitt eines Heizbereichs möglich. Dabei können die entsprechenden Beschichtungen je nach Notwendigkeit seriell aneinander anschließen und/oder übereinander mit teilweiser und/oder vollständiger Überlappung angeordnet sein. Somit kann der mindestens eine Isolations- bzw. Kontaktierungsbereich, vorzugsweise mehrere derartige Bereiche, auf einem äußeren Abschnitt eines Heizbereichs besonders zweckmäßig angeordnet werden, um eine optimale Stromflussrichtung zu gewährleisten und die stromführenden Anschlusselektroden an einer geeigneten Stelle des Heizwiderstands anbringen zu können. Eine weitere Ausführungsform eines keramischen Heizwiderstands eines erfindungsgemäßen elektrischen Heizelements sieht vor, dass der Heizbereich zumindest stückweise oder vollständig mit wenigstens einer isolierenden Beschichtung versehen ist. Somit ist es möglich, einen gesamten Wendelflächenkörper (bis auf einen kleinen Kontaktierungsbereich) mit einer dünnen, elektrisch isolierenden Beschichtung zu versehen, um den Heizwiderstand nach außen elektrisch zu isolieren.

Die vorgesehenen Beschichtungen können bereits auf dem Grünkörper aufgetragen sein, sodass der Heizbereich zusammen mit dem mindestens einen Kontaktierungsbereich und ggf. mit dem mindestens einen Isolationsbereich in einem Schritt durch Sintern des Grünkörpers zu dem fertigen keramischen Heizwiderstand gelangt, bei dem die Beschichtungen untereinander stoffschlüssig verbunden sind. Alternativ können die Beschichtungen auch nachträglich auf einen bereits gesinterten Grünkörper, d.h. auf einen bereits erzeugten keramischen Heizwiderstand aufgetragen werden, der nur den Heizbereich beinhaltet. Die zweitgenannte Vorgehensweise ist aufwändiger als die erstgenannte, da mindestens ein weiterer Sintervorgang notwendig ist.

Sintern ist ein Verfahren zur Herstellung oder Veränderung von Werkstoffen, bei dem körnige keramische oder metallische Stoffe, oft unter erhöhtem Druck, erhitzt werden, wobei die Temperaturen jedoch unterhalb der Schmelztemperatur der Komponenten bleiben, so dass die Form des Werkstückes, d.h. des Grünkörpers erhalten bleibt. Dabei kommt es in der Regel zu einer Schwindung, weil sich die Partikel des Ausgangsmaterials verdichten und Porenräume aufgefüllt werden. Sinterprozesse besitzen große Bedeutung bei der Keramikherstellung und auch in der Metallurgie. Durch die Temperaturbehandlung des Sinterns wird aus einem fein- oder grobkörnigen bzw. fein- oder grobporigen in einem vorangegangenen Prozessschritt gefertigten weichen Grünkörper ein festes Werkstück. Das Sintererzeugnis erhält erst durch die Temperaturbehandlung seine endgültigen Eigenschaften, wie Härte, Festigkeit oder Temperaturleitfähigkeit, die im jeweiligen Einsatz erforderlich sind, sodass mehrmaliges Sintem zu Veränderungen des keramischen Heizwiderstandes führen kann.

Dabei beträgt bei einem keramischen Heizwiderstand eines erfindungsgemäßen elektrischen Heizelements der Anteil elektrisch leitenden Komponente, insbesondere des bevorzugten Molybdändisilizids, vorzugsweise 20 bis 60 Gewichtsprozent und/oder 10 bis 30 Volumenprozent, vorzugsweise 25 bis 30 Gewichtsprozent bzw. 12 bis 15 Volumenprozent. Der Anteil der elektrisch isolierenden Komponente, beträgt entsprechend vorzugsweise 80 bis 40 Gewichtsprozent und/oder 90 bis 70 Volumenprozent, vorzugsweise 75 bis 70 Gewichtsprozent bzw. 88 bis 85 Volumenprozent. Die isolierende Komponente besteht dabei vorzugsweise aus einem Gemisch von Feldspat, Feldspatoiden oder anderen Silikatglas bildenden Stoffen und Aluminiumoxid, wobei der Anteil Aluminiumoxid beim erfindungsgemäßen Heizwiderstand vorzugsweise 20 bis 30 Volumenprozent und der Anteil Feldspat 50 bis 70 Volumenprozent beträgt. Diese Werte können durch vorhandene Verunreinigungen beeinflusst werden. Durch Abwandelung des Mischungsverhältnisses des Anteils der elektrisch leitenden Komponente, bzw. des Molybdändisilizids und des Anteils der elektrisch isolierenden Komponente können der spezifische Widerstand, d.h. die Leitfähigkeit des Heizbereichs, des Kontaktierungsbereichs und/oder des Isolationsbereichs in günstiger Weise in einem weiten Rahmen beliebig eigestellt werden, um den keramische Heizwiderstand bzw. das elektrische Heizelement auf den jeweiligen Anwendungsfall ideal abzustimmen.

Eine erfindungsgemäße Vorrichtung zum Erwärmen eines Fluids, vorzugsweise Luft, weist zumindest ein in einem der vorstehenden Abschnitte beschriebenes erfindungsgemäßes elektrisches Heizelement auf. Insbesondere handelt es sich bei einer erfindungsgemäßen Vorrichtung zum Erwärmen eines Fluids vorzugsweise um eine Vorrichtung zum Erwärmen bzw. Erhitzen eines Luftstroms in einem Lufterhitzer zum Trocknen oder Erwärmen von Gegenständen oder u. a. auch zur Anwendung bei der Plastifizierung von Kunststoffmaterialien, wie etwa entsprechenden Heißluftgebläsen oder Schweißautomaten.

Die Erfindung bietet im Vergleich zu einem Standard-Heizelement den Vorteil, dass der Herstellungsprozess stärker als bisher automatisiert werden kann, was wiederum zu niedrigeren Herstellungskosten führt. Weitere Vorteile sind eine höhere Lebensdauer und eine höhere erreichbare Temperatur des erhitzten Fluids und/oder eine kürzere Bauweise des Heizelements, bedingt durch eine erhöhte Betriebstemperatur des Heizelements oder durch einen verbesserter Wärmeübergang zwischen dem Heizwiderstand und dem Fluid, aufgrund einer größeren Wärmeübertragungsfläche sowie der einfachen Variation der elektrischen und/oder thermischen Eigenschaften. Ein erfindungsgemäßes elektrisches Heizelement wird im Wesentlichen durch zumindest ein rohrförmiges Element mit einem in dem rohrförmigen Element angeordneten keramischen Heizwiderstand gebildet, was eine wesentliche Vereinfachung gegenüber dem Stand der Technik mit den eingelegten elektrischen Widerstandsdrähten ist. Der keramische Teil ist zusätzlich elektrisch leitend.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar. Zur Ausführung der Erfindung müssen nicht alle Merkmale des Anspruchs 1 verwirklicht sein. Auch können einzelne Merkmale des Anspruchs 1 durch andere offenbarte Merkmale oder Merkmalskombinationen ersetzt werden.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen, in welchen gleiche oder funktionsgleiche Elemente mit identischen Bezugszeichen versehen sind. Dabei zeigen
- Fig. 1: eine schematische Darstellung eines keramischen Heizwiderstands eines erfindungsgemäßen elektrischen Heizelements in Alleinstellung in einer Seitenansicht;
- Fig. 2: eine Schnittansicht des keramischen Heizwiderstands aus Fig. 1 entlang der Linie A-A aus Fig. 1;
- Fig. 3: eine Schnittansicht des keramischen Heizwiderstands aus Fig. 1 entlang der Linie B-B aus Fig. 2;
- Fig. 4: eine Ansicht mit Draufsicht auf den Verbindungsbereich des keramischen Heizwiderstands aus Fig. 1 mit Blickrichtung entlang der Längsachse;
- Fig. 5: eine Ansicht in Draufsicht auf die Anschlussseite des keramischen Heizwiderstands aus Fig. 1 mit Blickrichtung entlang der Längsachse entgegengesetzt zu Fig. 4;
- Fig. 6: Längsschnittansicht einer schematischen Anordnung des keramischen Heizwiderstands im Schnittbild nach Fig. 2 in einem rohrförmigen Element eines erfindungsgemäßen elektrischen Heizelements;
- Fig. 7: Isometrische Ansicht eines erfindungsgemäßen elektrischen Heizelements mit einem (in dieser Ansicht nicht sichtbaren) keramischen Heizwiderstand;
- Fig. 8: Längsschnittansicht eines erfindungsgemäßen elektrischen Heizelements nach Fig. 7;
- Fig. 9: Ein Heißlufthandgerät mit einem erfindungsgemäßen elektrischen Heizelement (in dieser Ansicht nicht sichtbar); und
- Fig. 10: einen Schweißautomat zum überlappenden Verschweißen von flächigen Kunststoffmaterialien mit einem erfindungsgemäßen elektrischen Heizelement (in dieser Ansicht nicht sichtbar).

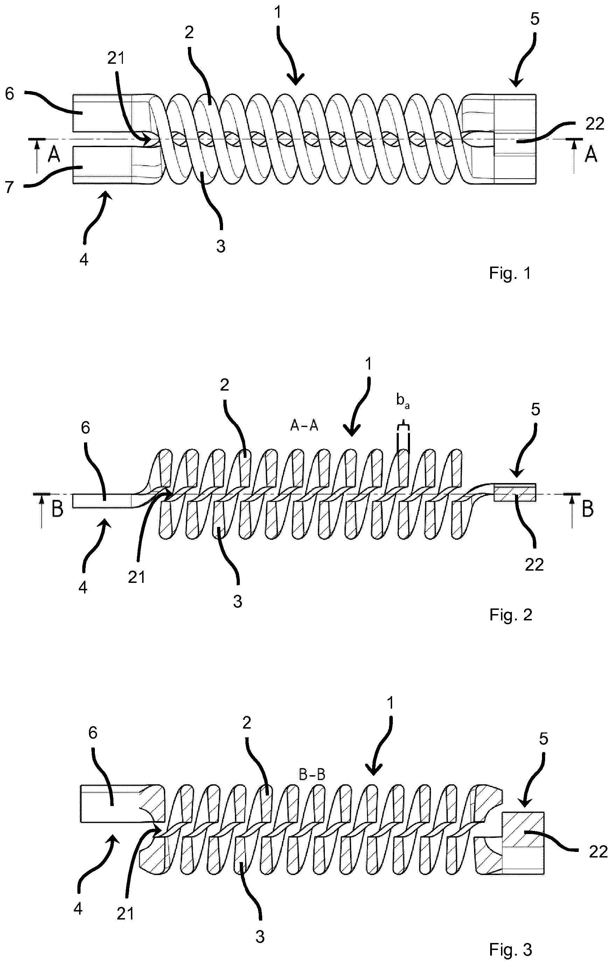

In der Abbildung in Fig. 1 ist ein Ausführungsbeispiel eines keramischen Heizwiderstands 1 eines erfindungsgemäßen elektrischen Heizelements 9 in Alleinstellung dargestellt. Der keramische Heizwiderstand 1 wird im Wesentlichen aus einer Anordnung aus einem ersten Wendelflächenkörper 2 und einem zweiten Wendelflächenkörper 3 gebildet, die berührungslos ineinander gewendelt sind und deren Schraubachsen zusammenfallen. Die Anordnung aus den beiden Wendelflächenkörpern entspricht damit einer Typ-1 Doppelhelix, die auch als zweigängige Schraube bezeichnet wird. Die gemeinsame Schraubachse der Wendenflächenkörper 2, 3 ist zugleich die Vorzugslängsachse des Heizwiderstands 1. Die Wendelflächenkörper 2, 3 sind identisch ausgebildet, jedoch um einen Winkel in einer Ebene senkrecht zur Schraubachse gegeneinander verdreht, damit die beiden Wendelflächenkörper 2, 3 berührungslos umeinander umlaufen. Aus diesem Grund ist das Zentrum der Anordnung aus den beiden Wendenflächenkörpern 2, 3 hohl, was durch eine Ausgestaltung der beiden Wendelflächenkörper 2, 3 als offene Wendelflächenkörper sichergestellt wird. Der zentrale Hohlraum 21 ist zylindrisch, wobei die Zylindersymmetrieachse der gemeinsamen Schraubachse der beiden Wendelflächenkörper 2, 3 entspricht. An beiden längsseitigen Enden 4, 5 der Anordnung aus den beiden Wendelflächenkörpern 2, 3 sind diese jeweils durch Anformungen entlang der gemeinsamen Schraubachse parallel zueinander fortgesetzt. Auf einer Längsseite der Anordnung aus den beiden Wendelflächenkörpern 2, 3 sind die jeweiligen Anformungen an die Wendelflächenkörper 2, 3 in einem Verbindungsbereich 22 elektrisch leitend miteinander verbunden. An der dem Verbindungsbereich 22 entgegengesetzten längsseitigen Ende 4 der Anordnung aus den beiden Wendelflächenkörpern 2, 3 sind die jeweiligen Anformungen als separate Anschlusselektroden 6, 7 ausgeführt, wobei die Anschlusselektrode 6 zu dem ersten Wendenflächenkörper 2 und Anschlusselektrode 7 zu dem zweiten Wendelflächenkörper 3 gehört.

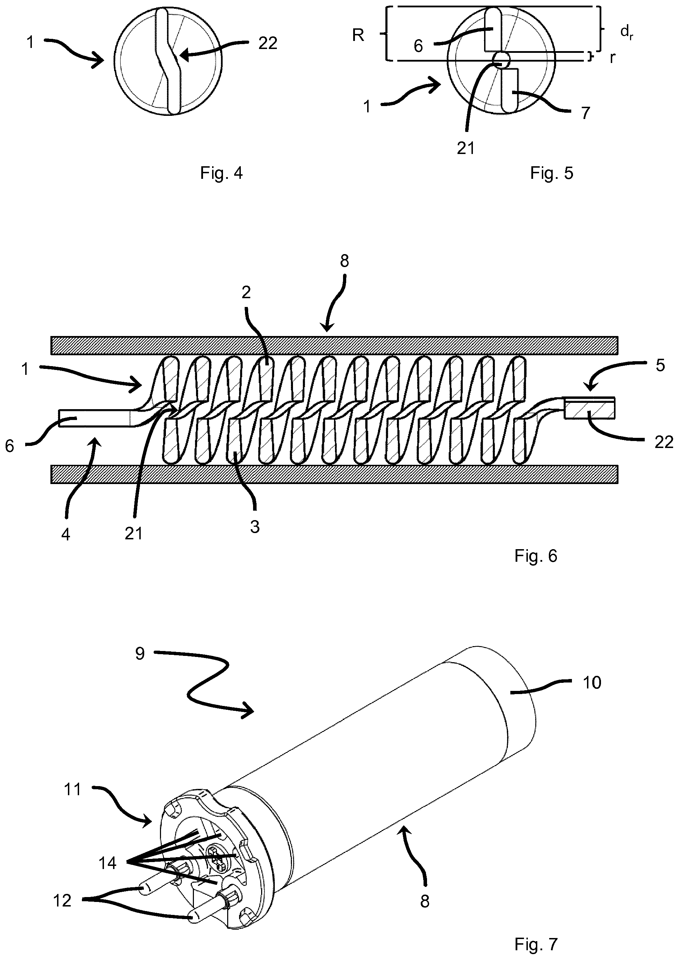

In Fig. 2 ist der keramische Heizwiderstand 1 als Schnittbild entlang der Linie A-A aus Fig. 1 und in Fig. 3 als Schnittbild entlang der Linie B-B aus Fig. 2 dargestellt. Der Innenradius r ebenso wie der Außenradius R und die radiale Dicke dr = R - r der Wendeln (siehe dazu Fig. 5) der beiden Wendelflächenkörper 2, 3 ist in dem gezeigten Ausführungsbeispiel über die gesamte axiale Länge der Anordnung aus den beiden Wendelflächenkörpern 2, 3 konstant. Die axiale Breite bₐ, d. h., die Dicke der Wendeln bezogen auf eine Richtung parallel zu der gemeinsamen Schraubachse der Anordnung aus den beiden Wendelflächenkörpern 2, 3 ist bei allen Wendeln der beiden Wendelflächenkörper 2, 3 ebenfalls identisch und vergrößert sich mit dem radialen Abstand von der gemeinsamen Schraubachse der beiden Wendelflächenkörper 2, 3, wenn man von der jeweiligen Abrundung am äußeren radialen Rand der Wendeln absieht.

In der Darstellung in Fig. 4 ist der keramische Heizwiderstand 1 aus Fig. 1 in einer Draufsicht auf das längsseitige Ende 5 der Anordnung aus den beiden Wendelflächenkörpern 2, 3 mit dem Verbindungsbereich 22 und in der Darstellung in Fig. 5 auf das entgegengesetzte längsseitige Ende 4 mit den beiden separaten Anschlusselektroden 6, 7 sowie dem innere Radius r und dem äußeren Radius R gezeigt.

In Fig. 6 ist eine schematische Längsschnittdarstellung des keramischen Heizwiderstands 1 aus Fig. 1 gemäß dem Schnittbild aus Fig. 2 in einem rohrförmigen Element 8 eines elektrischen Heizelements 9 gezeigt. Das rohrförmige Element 8 ist in dem hier gezeigten Ausführungsbeispiel hohlzylindrisch ausgeführt und der Innenradius des rohrförmigen Elements 8 ist nur geringfügig größer als der Außenradius der Anordnung aus den beiden Wendelflächenkörpern 2, 3 des im Inneren des rohrförmigen Elements 8 angeordneten Heizwiderstands 1. Damit kann der Heizwiderstand 1 problemlos in das rohrförmige Element eingeführt werden, wobei noch genügend Spiel in radialer Richtung zum Ausgleich von Fertigungstoleranzen ist und zudem sichergestellt ist, das in Folge thermischer Ausdehnung beim Betrieb des Heizwiderstands 1 der Heizwiderstand und die Innenseite des rohrförmigen Elements 8 nicht in Kontakt kommen. Das rohrförmige Element 8 besteht aus einem hitzebeständigen, elektrisch isolierenden, keramischen Material, vorzugsweise aus einer Silikatkeramik oder aus einer Oxidkeramik wie Aluminiumoxid.

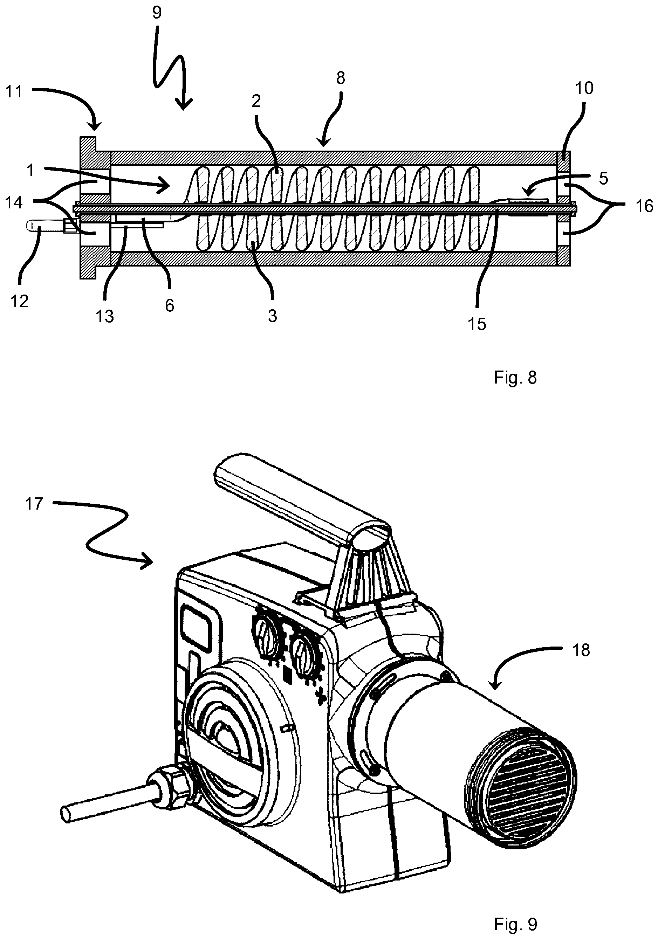

Ein derartiges rohrförmiges Element 8 ist Bestandteil eines in der isometrischen dreidimensionalen Abbildung in Fig. 7 dargestellten erfindungsgemäßen elektrischen Heizelements 9, wobei das rohrförmige Element 8 wie in Fig. 6 einen keramischen Heizwiderstand 1 enthält, der in Fig. 7 nicht zu sehen ist. In der Fig. 8 ist eine vereinfachte schematische Längsschnittansicht eines derartigen Heizelements 9 mit einem Heizwiderstand 1 im Inneren des rohrförmigen Elements 8 dargestellt. Neben einem rohrförmigen Element 8 und einem Heizwiderstand 1 weist das Heizelement 9 eine Abdeckscheibe 10, ein Anschlussstück 11 und ein Befestigungs- und Spannmittel 15 in Form eines sich entlang der zentralen Längsachse des Heizelements 9 erstreckenden Stabes aus einem elektrisch isolierenden, hitzebeständigen keramischen Material auf. Das Anschlussstück 11 weist zwei äußere elektrische Kontakte 12 auf, die im Inneren des Heizelements 9 jeweils in einen der beiden inneren elektrischen Kontakte 13 übergehen, wobei jeder der inneren elektrischen Kontakte 13 jeweils im Inneren des rohrförmigen Elements 8 einen der beiden Anschlusselektroden 6, 7 des Heizwiderstands 1 elektrisch kontaktiert. Das Anschlussstück 11 weist zudem vier Ausnehmungen 14 auf, durch die aus dem Außenraum Luft in das Innere des Heizelements 9 strömen, den Heizwiderstand 1 im rohrförmigen Element 8 umströmen und durch Ausnehmungen 16 in der Abdeckscheibe 10 wieder aus dem Inneren des Heizelements 9 herausströmen kann. Das Befestigungs- und Spannmittel 15 erstreckt sich sowohl durch das gesamte rohrförmige Element 8 und damit auch durch den Heizwiderstand 1 als auch durch das Anschlussstück 11 und die Abdeckscheibe 10 hindurch. Das Befestigungs- und Spannmittel 15 trägt das Heizelement 1 und ist mit entsprechenden Lagern an der Außenseite des Anschlussstück 11 und der Abdeckscheibe 10 derart ausgeführt, die gesamte Anordnung aus Anschlussstück 11, Heizwiderstand 1 und Abdeckscheibe 10 in axialer Richtung zu verspannen. Dies dient auch zur Begrenzung der thermischen Ausdehnung des Heizelements 1 in axialer Richtung. Bei dem in der Längsschnittansicht in Fig. 8 dargestellten Heizwiderstand 1 muss der Verbindungsbereich 5 der beiden Wendelflächenkörper 2, 3 anders gestaltet sein als bei dem in den Abbildungen in Fig. 1 bis Fig. 5 dargestellten Heizwiderstand 1, damit sich das Befestigungs- und Spannmittel 15 auch durch diesen Bereich geradlinig hindurch erstrecken kann. Der Heizwiderstand 1 kann hierzu etwa eine entsprechende Durchführung für das Befestigungs- und Spannmittel 15 im Verbindungsbereich 5 aufweisen.

In Fig. 9 ist beispielhaft ein Heißlufthandgerät 17 als Ausgestaltungsvariante einer erfindungsgemäßen Vorrichtung zur Erwärmung eines Fluids, insbesondere von Luft, gezeigt. Bei dem Heißlufthandgerät 17 ist im Heizrohr 18 ein erfindungsgemäßes Heizelement wie das in den Abbildungen in Fig. 7 und Fig. 8 gezeigte Heizelement 9 angeordnet.

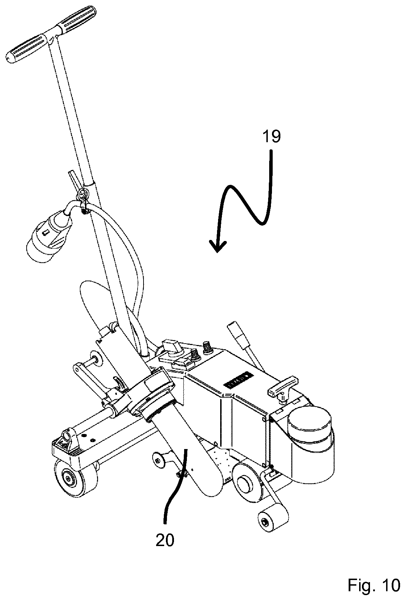

Fig. 10 zeigt als weiteres Beispiel für eine Ausgestaltungsvariante einer erfindungsgemäßen Vorrichtung zum Erwärmen eines Fluids, insbesondere Luft, einen Schweißautomaten 19 zum überlappenden Verschweißen von flächigen Kunststoff- und/oder Bitumenbahnen, wobei die zu verschweissenden Materiallagen mittels eines heißen Luftstroms zumindest in einem Verbindungsbereich wenigstens teilweise plastifiziert werden. Bei dem Schweißautomaten 19 ist in dem Heizrohr 20 ein erfindungsgemäßes Heizelement wie das in den Abbildungen in Fig. 7 und Fig. 8 gezeigte Heizelement 9 angeordnet.

### Bezugszeichenliste

1. Heizwiderstand
2. Erster Wendelflächenkörper
3. Zweiter Wendelflächenkörper
4. Erstes Ende
5. Zweites Ende
6. Erste Anschlusselektrode
7. Zweite Anschlusselektrode
8. Rohrförmiges Element
9. Heizelement
10. Abdeckscheibe
11. Anschlussstück
12. Äußere Kontakte
13. Innere Kontakte
14. Ausnehmungen für Lufteintritt
15. Befestigungsmittel/Spannmittel
16. Ausnehmungen für Luftaustritt
17. Handheißluftgerät
18. Heizrohr
19. Schweißautomat
20. Heizrohr
21. Zentraler Hohlraum
22. Verbindungsbereich

## Patentansprüche

1. Elektrisches Heizelement (9) zum Erwärmen eines Fluides mit zumindest einem rohrförmigen Element (8), dass von einem Fluid durchströmt wird oder durchströmbar ist, und mit einem, in dem rohrförmigen Element (8) angeordneten keramischen Heizwiderstand (1), wobei der Heizwiderstand (1) eine Anordnung aus zwei offenen Wendelflächenkörpern (2, 3) mit jeweils einer zentralen Schraubachse aufweist, wobei die Schraubachsen der Wendelflächenkörper (2, 3) zueinander parallel und die Wendelflächenkörper (2, 3) berührungslos ineinander gewendelt sind, die zentralen Schraubachsen der Wendeflächenkörper (2, 3) im Wesentlichen parallel zu der zentralen Achse des rohrförmigen Elements (8) ausgerichtet sind, die Wendelflächenkörper (2, 3) im Bereich eines Endes (5) der Wendelflächenanordnung elektrisch leitend miteinander verbunden sind und an einem gegenüberliegenden weiteren Ende (4) der Wendelflächenanordnung als separate Anschlusselektroden (6, 7) ausgebildet sind,
**dadurch gekennzeichnet, dass**
der Heizwiderstand (1) durch Sintern eines mindestens einen keramischen Rohstoff aufweisenden Grünkörpers hergestellt ist, eine elektrisch isolierende Komponente sowie eine elektrisch leitende Komponente aufweist und die elektrisch isolierende Komponente eine Matrix bildet, in der die elektrisch leitende Komponente aufgenommen ist, wobei zumindest einem zentralen, durch die offenen Wendelflächenkörper (2, 3) entlang der Schraubachsen der offenen Wendelflächenkörper (2, 3) gebildeten Hohlraum (21) ein elektrisch isolierendes Element (15) angeordnet ist, wobei das elektrisch isolierende Element (15) rohrförmig, stabförmig oder abschnittsweise rohrförmig und stabförmig ausgebildet ist, und die Querschnittsfläche des rohrförmigen Elements (8) bezüglich Form und Größe nur unwesentlich Größer als die maximale Querschnittsfläche des Heizwiderstands (1) ist.

2. Elektrisches Heizelement nach Anspruch 1, **dadurch gekennzeichnet, dass** das Verhältnis der radialen Wendeldicke und der axialen Wendelbreite zumindest eines Wendelflächenkörpers (2, 3) des keramischen Heizwiderstands (1) mindestens 2:1 beträgt.

3. Elektrisches Heizelement nach zumindest einem der Ansprüche 1 oder 2, **dadurch gekennzeichnet, dass** das Verhältnis zwischen dem Innendurchmesser und dem Außendurchmesser zumindest eines Wendelflächenkörpers (2, 3) des keramischen Heizwiderstands (1) maximal 1:2 beträgt.

4. Elektrisches Heizelement nach zumindest einem der Ansprüche 1 bis 3, **dadurch gekennzeichnet, dass** zumindest ein Wendelflächenkörper (2, 3) des keramischen Heizwiderstands (1) eine variable axiale Wendelbreite, insbesondere eine radial anwachsende axiale Wendelbreite, aufweist.

5. Elektrisches Heizelement nach zumindest einem der Ansprüche 1 bis 4, **dadurch gekennzeichnet, dass** zumindest ein Wendelflächenkörper (2, 3) des keramischen Heizwiderstands (1) eine entlang seiner Schraubachse variable axiale Wendelbreite aufweist.

6. Elektrisches Heizelement nach zumindest einem der Ansprüche 1 bis 5, **dadurch gekennzeichnet, dass** zumindest ein Wendelflächenkörper (2, 3) des keramischen Heizwiderstands (1) entlang seiner Schraubachse einen variablen Abstand benachbarter Windungen aufweist.

7. Elektrisches Heizelement nach zumindest einem der Ansprüche 1 bis 6, **dadurch gekennzeichnet, dass** die elektrisch leitende Komponente des keramischen Heizwiderstands (1) zumindest teilweise aus einer Metalllegierung vom Silizid-Typ, vorzugsweise Molybdändisilizid, gebildet ist.

8. Elektrisches Heizelement nach zumindest einem der Ansprüche 1 bis 7, **dadurch gekennzeichnet, dass** die elektrisch isolierende Komponente des keramischen Heizwiderstands (1) zumindest aus einem Mineral vom Silikat-Typ, vorzugsweise Feldspat, Feldspatoiden oder anderen Silikatglas bildenden Stoffen, einer Keramik vom Oxid-Typ, vorzugsweise Aluminiumoxid und/oder einer beliebigen Kombination hiervon, gebildet ist.

9. Vorrichtung (17, 19) zum Erwärmen eines Fluides mit zumindest einem elektrischen Heizelement (9) nach zumindest einem der Ansprüche 1 bis 8.

## Claims

1. An electrical heating element (9) for heating a fluid, comprising at least one tubular element (8) through which a fluid flows or can flow, and with a ceramic heating resistor (1) disposed in the tubular element (8), wherein the heating resistor (1) comprises an arrangement of two open helicoid bodies (2, 3) having a respective central screw axis, the screw axes of the helicoid bodies (2, 3) being parallel to one another and the helicoid bodies (2, 3) being helically wound inside one another in a contactless manner, the central screw axes of the helicoid bodies (2, 3) being oriented substantially parallel to the central axis of the tubular element (8), the helicoid bodies (2, 3) being connected to one another in an electrically conducting manner in the region of one end (5) of the helicoid arrangement and designed as separate connecting electrodes (6, 7) at an opposing further end (4) of the helicoid arrangement, **characterized in that** the heating resistor (1) being produced by sintering a green body, comprising at least one ceramic raw material, and comprising an electrically insulating component and an electrically conducting component, and the electrically insulating component forming a matrix in which the electrically conducting component is accommodated, wherein an electrically insulating element (15) being disposed in at least one central cavity (21) formed by the open helicoid bodies (2, 3) along the screw axes of the open helicoid bodies (2, 3), the electrically insulating element (15) having a tubular, rod-shaped or sectionally tubular and rod-shaped design, and the cross-sectional surface of the tubular element (8), in terms of shape and size, being only insignificantly larger than the maximum cross-sectional surface of the heating resistor (1).

2. The electrical heating element according to claim 1, **characterized in that** the ratio of the radial helix thickness to the axial helix width of at least one helicoid body (2, 3) of the ceramic heating resistor (1) is at least 2:1.

3. The electrical heating element according to at least one of claims 1 or 2, **characterized in that** the ratio of the inside diameter to the outside diameter of at least one helicoid body (2, 3) of the ceramic heating resistor (1) is a maximum of 1:2.

4. The electrical heating element according to at least one of claims 1 to 3, **characterized in that** at least one helicoid body (2, 3) of the ceramic heating resistor (1) has a variable axial helix width, and in particular a radially increasing axial helix width.

5. The electrical heating element according to at least one of claims 1 to 4, **characterized in that** at least one helicoid body (2, 3) of the ceramic heating resistor (1) has a variable axial helix width along the screw axis thereof.

6. The electrical heating element according to at least one of claims 1 to 5, **characterized in that** at least one helicoid body (2, 3) of the ceramic heating resistor (1) has a variable distance between adjoining turns along the screw axis thereof.

7. The electrical heating element according to at least one of claims 1 to 6, **characterized in that** the electrically conducting component of the ceramic heating resistor (1) is at least partially formed of a metal alloy of the silicide type, preferably of molybdenum disilicide.

8. The electrical heating element according to at least one of claims 1 to 7, **characterized in that** the electrically insulating component of the ceramic heating resistor (1) is formed at least of a mineral of the silicate type, preferably feldspar, feldspathoids or other substances forming silicate glass, a ceramic of the oxide type, preferably aluminium oxide, and/or an arbitrary combination thereof.

9. A device (17, 19) for heating a fluid, comprising at least one electrical heating element (9) according to at least one of claims 1 to 8.

## Revendications

1. Élément chauffant électrique (9) pour réchauffer un fluide, avec au moins un élément tubulaire (8) traversé ou pouvant être traversé par un fluide et avec une résistance chauffante céramique (1) disposée dans l'élément tubulaire (8), la résistance chauffante (1) présentant un agencement de deux corps en hélicoïde ouverts (2, 3) ayant chacun un axe de vis central, les axes de vis des corps en hélicoïde (2, 3) étant parallèles entre eux et les corps en hélicoïde (2, 3) étant enroulés l'un dans l'autre sans contact, les axes de vis centraux des corps en hélicoïde (2, 3) étant orientés sensiblement parallèlement à l'axe central de l'élément tubulaire (8), 3), les corps en hélicoïde (2, 3) étant reliés entre eux de manière électriquement conductrice dans la zone d'une extrémité (5) de l'agencement d'hélicoïdes et étant réalisés sous la forme d'électrodes de connexion séparées (6, 7) à une autre extrémité (4), opposée, de l'agencement d'hélicoïdes,
**caractérisé en ce que**
la résistance chauffante (1) est fabriquée par frittage d'un corps vert présentant au moins une matière première céramique, présente un composant électriquement isolant ainsi qu'un composant électriquement conducteur et le composant électriquement isolant forme une matrice dans laquelle le composant électriquement conducteur est reçu, dans lequel, dans au moins une cavité (21) formée par les corps en hélicoïde ouverts (2, 3) le long des axes de vis des corps en hélicoïde ouverts (2, 3), un élément électriquement isolant (15) est disposé, dans lequel l'élément électriquement isolant (15) est réalisé en forme de tube, en forme de tige ou en forme de tube et en forme de tige par parties, et la surface de section transversale de l'élément tubulaire (8) n'est que très légèrement plus grande en termes de forme et de taille que la surface de section transversale maximale de la résistance chauffante (1).

2. Élément chauffant électrique selon la revendication 1, **caractérisé en ce que** le rapport entre l'épaisseur d'hélice radiale et la largeur d'hélice axiale d'au moins un corps en hélicoïde (2, 3) de la résistance chauffante céramique (1) est d'au moins 2:1.

3. Élément chauffant électrique selon au moins l'une des revendications 1 ou 2, **caractérisé en ce que** le rapport entre ie diamètre intérieur et le diamètre extérieur d'au moins un corps en hélicoïde (2, 3) de la résistance chauffante céramique (1) est au maximum de 1:2.

4. Élément chauffant électrique selon au moins l'une des revendications 1 à 3, **caractérisé en ce qu'au** moins un corps en hélicoïde (2, 3) de la résistance chauffante céramique (1) présente une largeur d'hélice axiale variable, en particulier une largeur d'hélice axiale croissante radialement.

5. Élément chauffant électrique selon au moins l'une des revendications 1 à 4, **caractérisé en ce qu'au** moins un corps en hélicoïde (2, 3) de la résistance chauffante céramique (1) présente une largeur d'hélice axiale variable le long de son axe de vis.

6. Élément chauffant électrique selon au moins l'une des revendications 1 à 5, **caractérisé en ce qu'au** moins un corps en hélicoïde (2, 3) de la résistance chauffante céramique (1) présente un espacement variable des spires adjacentes le long de son axe de vis.

7. Élément chauffant électrique selon au moins l'une des revendications 1 à 6, **caractérisé en ce que** le composant électriquement conducteur de la résistance chauffante céramique (1) est au moins partiellement formé d'un alliage métallique de type siliciure, de préférence le disiliciure de molybdène.

8. Élément chauffant électrique selon au moins l'une des revendications 1 à 7, **caractérisé en ce que** le composant électriquement isolant de la résistance chauffante céramique (1) est formé au moins d'un minéral de type silicate, de préférence le feldspath, les feldspathoïdes ou d'autres substances formant des verres de silicate, d'une céramique de type oxyde, de préférence de l'oxyde d'aluminium, et/ou d'une combinaison quelconque de ceux-ci.

9. Dispositif (17, 19) pour réchauffer un fluide comportant au moins un élément chauffant électrique (9) selon au moins l'une des revendications 1 à 8.
